# EUROPEAN PATENT APPLICATION

(11) **EP 4 681 971 A1**
(43) Date of publication of application: **21.01.2026**
(21) Application number: 24895619.5
(22) Date of filing: 27.06.2024
(51) Int. Cl.: B60L 9/00, B60L 1/00

(54) **AUXILIARY POWER SUPPLY SYSTEM FOR DUAL-CURRENT TRAIN**

(30) Priority: 01.12.2023 CN 202311638613
(71) Applicant: CRRC Changchun Railway Vehicles Co., Ltd., Changchun, Jilin 130000 (CN)
(72) Inventor: YIN, Hang, Changchun, Jilin 130000 (CN); LI, Xuefei, Changchun, Jilin 130000 (CN); GUAN, Chao, Changchun, Jilin 130000 (CN); JIANG, Yu, Changchun, Jilin 130000 (CN); GENG, Chengbang, Changchun, Jilin 130000 (CN); WANG, Guidong, Changchun, Jilin 130000 (CN); WEI, Botao, Changchun, Jilin 130000 (CN); DING, Xibing, Changchun, Jilin 130000 (CN)
(74) Representative: v. Bezold & Partner Patentanwälte - PartG mbB
(86) International application number: PCT/CN2024/102104
(87) International publication number: WO 2025/112516

(57) **Abstract**

An auxiliary power supply system for a dual-current train, the system comprising: a pantograph (1), a traction transformer (2), a traction converter (3), and an integrated power supply module (4), wherein an input side of the pantograph (1) is connected to a power grid, and an output side thereof is connected to the traction transformer (2); an output side of the traction transformer (2) is connected to the traction converter (3); an output side of the traction converter (3) is connected to the integrated power supply module (4); and an output side of the integrated power supply module (4) is connected to an input side of an air conditioner, an input side of a direct-current load, and an input side of an alternating-current load. Compared with traditional auxiliary power supply systems, the auxiliary power supply system for a dual-current train in the present application has the advantages of simpler electric-energy conversion links, higher conversion efficiency, and a lighter weight.

## Description

### CROSS-REFERENCE TO RELATED APPLICATION

The present disclosure claims priority to Chinese patent application No. 2023116386133, filed with the Chinese Patent Office on December 1, 2023, entitled "AUXILIARY POWER SUPPLY SYSTEM FOR DUAL-CURRENT TRAIN", the entire contents of which are incorporated herein by reference.

### TECHNICAL FIELD

The present disclosure belongs to the field of rail transportation, and particularly relates to a dual-voltage train auxiliary power supply system (i.e., an auxiliary power supply system for a dual-voltage train).

### BACKGROUND ART

With the rapid development of urban rail transportation, the inter-city rail network is gradually established, and as a result, the dual-voltage train has emerged. The so-called dual-voltage train is in contrast to conventional urban trains. Specifically, the traditional urban trains are generally powered by either direct current or alternating current individually, however, the dual-voltage train, depending on the local conditions, receives a direct-current power supply or an alternating-current power supply.

Although there are differences in power supply, the dual-voltage trains, like the traditional urban trains, not only supply power to the traction device by using the power supply, but also supply power to other components by using the power supply during the train operation process. The power-consuming components during the train operation process can be specifically divided into three major categories: the air conditioning system, alternating-current load component, and direct-current load component. Therefore, like the traditional urban trains, the dual-voltage train also needs a set of auxiliary power supply systems to supply power to power-consuming components during the train operation process.

### SUMMARY

In view of this, an objective of the present disclosure is to provide a dual-voltage train auxiliary power supply system, which has a simpler electric energy conversion process, a higher conversion efficiency, and a lighter weight than traditional auxiliary power supply systems.

The embodiments of the present disclosure provide a dual-voltage train auxiliary power supply system, including a pantograph, a traction transformer, a traction converter, and integrated power supply modules, wherein
an input side of the pantograph is connected to a grid and an output side of the pantograph is connected to the traction transformer;
an output side of the traction transformer is connected to the traction converter;
an output side of the traction converter is connected to the integrated power supply modules; and
an output side of the integrated power supply modules is connected to an input side of an air conditioner, an input side of a direct-current load, and an input side of an alternating-current load.

Further, the traction transformer is configured to convert a high-voltage alternating-current voltage to a medium-voltage alternating-current voltage.

Further, the traction converter is configured to convert the medium-voltage alternating-current voltage to a high-voltage direct-current voltage.

Further, the integrated power supply modules are configured to convert the high-voltage direct-current voltage to a low-voltage alternating-current voltage and convert the high-voltage direct-current voltage to a low-voltage direct-current voltage.

Further, the low-voltage direct-current voltage is configured to supply power to the direct-current load, and the low-voltage alternating-current voltage includes an alternating-current voltage applicable to supply power to the air conditioner and an alternating-current voltage applicable to supply power to the alternating-current load.

Further, the pantograph can receive AC 25kV alternating-current voltage or DC 1500V direct-current voltage.

Further, the high-voltage alternating-current voltage is in a range of AC 22kV to AC 29kV; the medium-voltage alternating-current voltage is in a range of AC 900V to AC 1200V; the high-voltage direct-current voltage is in a range of DC 1000V to DC 1950V; the low-voltage alternating-current voltage is in a range of AC 0V to AC 380V; and the low-voltage direct-current voltage is in a range of DC 0V to DC 110V.

Further, each train is provided with the at least two integrated power supply modules, which are mutually redundant.

Further, after the integrated power supply modules convert the high-voltage direct-current voltage to the low-voltage direct-current voltage, the low-voltage direct-current voltage is only output at a front of the train; and after the integrated power supply modules convert the high-voltage direct-current voltage to the load low-voltage alternating-current voltage, the load low-voltage alternating-current voltage is only output at a middle part of the train.

Further, a battery is connected between the integrated power supply modules and the input side of the direct-current load.

The present disclosure includes the following beneficial effects.
1. Compared with the traditional auxiliary power supply system, it reduces the use of the electric heater, auxiliary converter, and three-phase 380V busbar, which reduces the weight of each train by about 4200KG, thereby reducing energy consumption by 1.2%.
2. After adopting the integrated power supply module, the train reduces the inverter process, and the air conditioner eliminates the intermediate rectification process, so that the overall system efficiency can be improved by about 9%.
3. Since each train is provided with two integrated power supply modules, which are mutually redundant, the stability and reliability of the power supply system are improved.
4. Compared with the traditional AC auxiliary power supply solution, the integrated power supply module adopts the DC 1500V power supply system to form multiple micro-grid systems, and the direct current power grid does not have the problem of AC harmonics.

In order to make the above objectives, features, and advantages of the present disclosure more obvious and understandable, the following preferred embodiments, together with the drawings, are described in detail as follows.

### BRIEF DESCRIPTION OF DRAWINGS

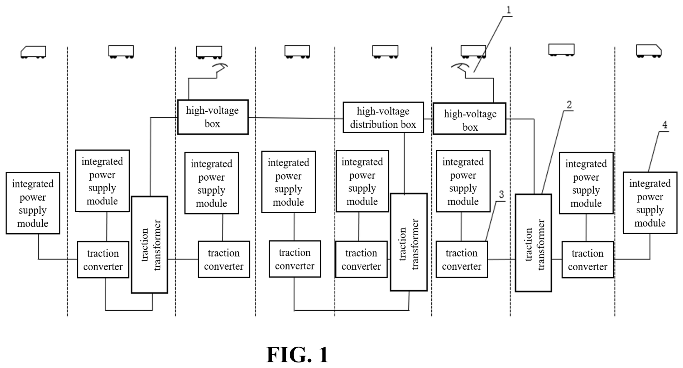

FIG. 1 is a schematic diagram of a dual-voltage train auxiliary power supply system of the present disclosure.

In order to more clearly illustrate the technical solutions in the embodiments of the present disclosure, the drawings to be used in the embodiments will be briefly introduced below. It is to be understood that the following drawings only show certain embodiments of the present disclosure, and therefore should not be regarded as a limitation of the scope. For persons of ordinary skill in the field, other relevant drawings can be obtained according to these drawings without inventive efforts.

Reference numbers: 1 - pantograph; 2 - traction transformer; 3 - traction converter; 4 - integrated power supply module.

### DETAILED DESCRIPTION OF EMBODIMENTS

The terms "comprise" and "include," "contain," or "characterized by" in the specification, claims, and drawings of the present disclosure are synonymous, and are inclusive or open-ended, and do not exclude additional unrecited elements or method steps. The term "comprise" is a technical term used in claim language, meaning that the recited elements are present, but other elements may also be added and still fall within the scope of the claimed structure or method.

In order to better understand the above objectives, features, and advantages of the present disclosure, the following will provide a detailed description of the present disclosure in conjunction with drawings and specific embodiments. It should be noted that the embodiments of the present disclosure and features in the embodiments can be combined with each other without conflict.

Many specific details in the following description are illustrated to facilitate a full understanding of the present disclosure. The embodiments described are only partial embodiments of the present disclosure, but not all of the embodiments. Based on the embodiments in the present disclosure, all other embodiments obtained by a person of ordinary skill in the art without making creative labor fall within the scope of protection of the present disclosure.

Unless otherwise defined, all technical and scientific terms used herein have the same meanings as are commonly understood by those skilled in the art belonging to the present disclosure. The terms used herein in the specification of the present disclosure are only for the purpose of describing specific embodiments and are not intended to limit the present disclosure.

Reference to "embodiment" in the text means that particular features, structures, or characteristics described in conjunction with the embodiments can be included in at least one embodiment of the present disclosure. The occurrence of the phrase at various positions in the specification does not necessarily all refer to the same embodiment, nor is it an independent or alternative embodiment that is mutually exclusive with other embodiments. It is explicitly and implicitly understood by those ordinarily skilled in the art that the embodiments described in the text can be combined with other embodiments.

Referring to FIG. 1, a dual-voltage train auxiliary power supply system is provided, including a pantograph 1, a traction transformer 2, a traction converter 3, and integrated power supply modules 4, wherein an input side of the pantograph 1 is connected to a grid, and an output side of the pantograph 1 is connected to the traction transformer 2 via a high-voltage box and a high-voltage distribution box; an output side of the traction transformer 2 is connected to the traction converter 3; an output side of the traction converter 3 is connected to the integrated power supply modules 4; and an output side of the integrated power supply modules 4 is connected to an input side of an air conditioner, an input side of direct-current load, and an input side of alternating-current load.

The traction transformer 2 is configured to convert a high-voltage alternating-current voltage to a medium-voltage alternating-current voltage. The high-voltage alternating-current voltage is in a range of AC 22kV to AC 29kV. The medium-voltage alternating-current voltage is in a range of 900V to 1200V.

The traction converter 3 is configured to convert the medium-voltage alternating-current voltage to a high-voltage direct-current voltage. The high-voltage direct-current voltage is in a range of 1000V to 1950V.

The low-voltage alternating-current voltage includes an alternating-current voltage applicable to supply power to the air conditioner and an alternating-current voltage applicable to supply power to the alternating-current load. The supply voltage range is 0V to 380V.

The pantograph 1 can receive AC 25kV alternating-current voltage or DC 1500V direct-current voltage.

When the pantograph 1 receives the AC 25kV alternating-current voltage, the AC 25kV alternating-current voltage is input to the traction transformer 2, and the traction transformer 2 converts the AC 25kV alternating-current voltage to AC 1000V alternating-current voltage and outputs it to the traction converter 3. The traction converter 3 includes a rectification module, and the rectification module converts the AC 1000V alternating-current voltage to DC 1500V direct-current voltage.

The integrated power supply modules 4 can convert the DC 1500V direct-current voltage output from the traction converter 3 to AC 380V, thereby supplying power to the air conditioning frequency converter. The integrated power supply modules 4 can also convert the DC 600V direct-current voltage to AC 380V (i.e., the load low-voltage alternating-current voltage), thereby supplying power to the alternating-current loads. The integrated power supply modules 4 can further convert the DC 1500V direct-current voltage output from the traction converter 3 to DC 110V (i.e., the load low-voltage direct-current voltage), thereby supplying power to the direct-current loads.

When the pantograph 1 receives the DC 1500V direct-current voltage, it is directly output to the integrated power supply module 4. The integrated power supply module 4 can convert the DC 1500V direct-current voltage to DC 110V (i.e., the load low-voltage direct-current voltage), thereby supplying power to the direct-current load; the integrated power supply module 4 can convert the DC 1500V direct-current voltage to AC 380V, thereby supplying power to the air conditioning frequency converter; and the integrated power supply module 4 can convert the DC 1500V direct-current voltage to AC 380V (i.e., the load low-voltage alternating-current voltage), thereby supplying power to the alternating-current load.

In some other embodiments, each train is provided with the at least two integrated power supply modules 4, which are mutually redundant.

In some other embodiments, after the integrated power supply modules 4 convert the high-voltage direct-current voltage to the low-voltage alternating-current voltage, the low-voltage direct-current voltage is only output at a front of the train; and after the integrated power supply modules 4 convert the low-voltage alternating-current voltage to the load low-voltage alternating-current voltage, the load low-voltage alternating-current voltage is only output at a middle part of the train.

In some other embodiments, a battery is connected between the integrated power supply modules 4 and the input side of the direct-current load.

The above embodiments of the present disclosure are described in detail, and specific examples are applied herein to illustrate the principles and embodiments of the present disclosure, and the description of the above embodiments is only used to help understand the methods of the present disclosure and its core ideas.

It is apparent to those skilled in the art that the present disclosure is not limited to the details of the exemplary embodiments described above, and the present disclosure can be realized in other specific forms without departing from the spirit or essential features of the present disclosure. Therefore, the embodiments are to be regarded as exemplary and non-limiting from any point of view. The scope of the present disclosure is limited by the appended claims and not by the foregoing description, and is therefore intended to include all changes falling within the meaning and scope of the equivalent elements of the claims. Any reference number in the claim should not be regarded as limiting the claim to which it relates. Furthermore, it is clear that the word "comprise" does not exclude other units or steps, and the singular form does not exclude the plural form. The plurality of units or devices stated in the system claims can also be realized by a single unit or device through software or hardware. The terms of first and second are used to denote names and do not indicate any specific order.

Meanwhile, for the ordinary technical personnel in the field, there will be variations in the embodiments and application scope according to the idea of the present disclosure. In summary, the contents of the specification should not be construed as a limitation of the present disclosure.

## Claims

1. A dual-voltage train auxiliary power supply system, comprising a pantograph, a traction transformer, a traction converter, and integrated power supply modules, wherein
an input side of the pantograph is connected to a grid and an output side is connected to the traction transformer;
an output side of the traction transformer is connected to the traction converter;
an output side of the traction converter is connected to the integrated power supply modules; and
an output side of the integrated power supply modules is connected to an input side of an air conditioner, an input side of a direct-current load, and an input side of an alternating-current load.

2. The dual-voltage train auxiliary power supply system according to claim 1, wherein the traction transformer is configured to convert a high-voltage alternating-current voltage to a low-voltage alternating-current voltage.

3. The dual-voltage train auxiliary power supply system according to claim 2, wherein the traction converter is configured to convert the low-voltage alternating-current voltage to a high-voltage direct-current voltage.

4. The dual-voltage train auxiliary power supply system according to claim 3, wherein the integrated power supply modules are configured to convert the high-voltage direct-current voltage to a low-voltage alternating-current voltage and a low-voltage direct-current voltage.

5. The dual-voltage train auxiliary power supply system according to claim 4, wherein the low-voltage direct-current voltage is configured to supply power to the direct-current load, and the low-voltage alternating-current voltage comprises a voltage applicable to supply power to the air conditioner and a voltage applicable to supply power to the alternating-current load.

6. The dual-voltage train auxiliary power supply system according to claim 1, wherein the pantograph is able to receive an AC 25kV alternating-current voltage or a DC 1500V direct-current voltage.

7. The dual-voltage train auxiliary power supply system according to claim 4, wherein the high-voltage alternating-current voltage is in a range of AC 22kV to AC 29kV; the medium-voltage alternating-current voltage is in a range of AC 900V to AC 1200V; the high-voltage direct-current voltage is in a range of DC 1000V to DC 1950V; the low-voltage alternating-current voltage is in a range of AC 0V to AC 380V; and the low-voltage direct-current voltage is in a range of DC 0V to DC 110V.

8. The dual-voltage train auxiliary power supply system according to claim 1, wherein each train is provided with the at least two integrated power supply modules, and the at least two integrated power supply modules are mutually redundant.

9. The dual-voltage train auxiliary power supply system according to claim 4, wherein after the integrated power supply modules convert the high-voltage direct-current voltage to the low-voltage direct-current voltage, the low-voltage direct-current voltage is only output at a front of the train; and after the integrated power supply modules convert the high-voltage direct-current voltage to the load low-voltage alternating-current voltage, the load low-voltage alternating-current voltage is only output at a middle part of the train.

10. The dual-voltage train auxiliary power supply system according to claim 9, wherein a battery is connected between the integrated power supply modules and the input side of the direct-current load.
